# EUROPÄISCHE PATENTANMELDUNG

(11) **EP 1 780 097 A2**
(43) Veröffentlichungstag der Anmeldung: **02.05.2007**
(21) Anmeldenummer: 06117770.5
(22) Anmeldetag: 25.07.2006
(51) Int. Cl.: B62D 5/04

(54) **Elektrische Servolenkung**

(30) Priorität: 26.10.2005 DE 102005051220
(71) Anmelder: ZF-Lenksysteme GmbH, 73527 Schwäbisch Gmünd (DE)
(72) Erfinder: Bareis, Helmut, 73569, Eschach (DE); Budaker, Martin, 73540, Heubach (DE); Hetzel, Oliver, 73550, Waldstetten (DE); Hauck, Michael, 73527, Schwäbisch Gmünd (DE)

(57) **Zusammenfassung**

Eine Servolenkung, insbesondere für ein Kraftfahrzeug, mit einem Elektromotor (2), welcher eine lenkunterstützende Kraft mittels eines Riemengetriebes (5) auf ein Kugelmutter-Spindel-Getriebe zum Auslenken von Fahrzeugrädern überträgt, weist einen Exzenter (8) auf, über den das Kugelmutter-Spindel-Getriebe (7) und/oder der Elektromotor (2) in einem Lenkgehäuse (1) gelagert ist. Durch eine Verdrehung des Exzenters (8) im Lenkgehäuse (1) ist die Spannung eines Riemens (15) des Riemengetriebes (5) einstellbar. Der Exzenter (8) weist am Außenumfang und/oder das Lenkgehäuse (1) in seiner Innenwandung wenigstens eine Ausnehmung (18) auf. In die Ausnehmung (18) ist zur Fixierung des Exzenters (8) zu dem Lenkgehäuse (1) ein Sicherungselement (19) einbringbar. Das Sicherungselement (19) steht nach dem Einbringen in Wirkverbindung mit dem Exzenter (8) und dem Lenkgehäuse (1).

## Beschreibung

Die Erfindung betrifft eine Servolenkung, insbesondere für Kraftfahrzeuge, mit einem Elektromotor, welcher eine lenkunterstützende Kraft mittels eines Riemengetriebes auf ein Kugelmutter-Spindel-Getriebe zum Auslenken von Fahrzeugrädern überträgt gemäß dem Oberbegriff von Anspruch 1.

Eine gattungsgemäße Vorrichtung ist aus der DE 103 10 492 A1 bekannt.

Gemäß der DE 103 10 492 A1 ist vorgesehen, dass ein für die Lenkunterstützung zuständiger Elektromotor mittels eines Riemengetriebes mit einem Kugelmutter-Spindel-Getriebe zum Auslenken von Fahrzeugrädern verbunden ist. Eine Ausgangswelle des Elektromotors und eine Kugelmutter des Kugelmutter-Spindel-Getriebes sind jeweils mit einer Riemenscheibe (bzw. Zahnscheibe) verbunden. Die Riemenscheibe der Ausgangswelle des Elektromotors ist mit der Riemenscheibe der Kugelmutter mittels einem Riemen antriebsmäßig verbunden. Das Kugelgewinde setzt die Rotation der Kugelmutter in eine translatorische Bewegung der Spindel des Kugelmutter-Spindel-Getriebes bzw. der Zahnstange um.

Die Kugelmutter ist über einen Exzenter in einem Lenkgehäuse derart gelagert, dass der Achsabstand zwischen der Ausgangswelle des Elektromotors und der Spindel bzw. der Zahnstange variierbar ist. Durch eine Verdrehung des Exzenters (welcher somit Teil der Lagerung von Kugelmutter und Riemenscheibe ist) kann die Spannung des Riemens des Riemengetriebes eingestellt werden.

Alternativ oder ergänzend dazu kann gemäß der DE 103 10 492 A1 auch der Elektromotor über einen Exzenter derart gelagert sein, dass der Achsabstand zwischen der Ausgangswelle und der Spindel bzw. der Zahnstange variierbar ist.

Die Riemeneinstellung ist für die Funktion und die Betriebssicherheit des Lenksystems von besonderer Bedeutung. Bei nachlassender Riemenspannung kann der Riemen überspringen, durchrutschen oder auf andere Art und Weise außer Eingriff geraten. Damit ist die Servolenkung nicht mehr vollständig funktionstüchtig.

Einflüsse, die zum Nachlassen der Riemenspannung führen, können je nach Ausführung der Konstruktion vielfältig sein. Ein Nachlassen der Riemenspannung kann beispielsweise aus Momenten aus der Riemenspannung selbst mit der Exzentrität als Hebelarm resultieren. Denkbar sind jedoch auch Reibmomente aus der Lagerung oder Momente aus dem Riemengetriebe, die ebenfalls zum Nachlassen der Riemenspannung führen können. Ein Nachlassen der Riemenspannung kann sich auch durch Vibrationen während der Montage oder dem Betrieb ergeben.

Um eine Funktionsfähigkeit der Servolenkung nicht zu beeinflussen, muss daher zuverlässig vermieden werden, dass sich die Riemenspannung während der weiteren Montage und der Betriebsdauer des Lenksystems verändert.

Der vorliegenden Erfindung liegt daher die Aufgabe zugrunde, eine Servolenkung der eingangs erwähnten Art zu schaffen, bei der mit einfachen und kostengünstigen Maßnahmen eine Sicherung der Riemenspannung erreicht wird.

Erfindungsgemäß wird diese Aufgabe durch Anspruch 1 gelöst.

Durch die wenigstens eine Ausnehmung am Außenumfang des Exzenters und/oder in der Innenwandung des Lenkgehäuses und das Einbringen eines Sicherungselements in die Ausnehmung ist es möglich, die Position des Exzenters zu dem Lenkgehäuse zu fixieren. Dadurch wird auch die Einstellung der Riemenspannung, welche sich durch die Position des Exzenters in dem Lenkgehäuse ergibt, fixiert. Vorgesehen ist dabei, dass nach der Einstellung der Riemenspannung, welche durch ein entsprechendes Verdrehen des Exzenters im Lenkgehäuse erfolgt - hierzu wird auf die DE 103 10 492 A1 verwiesen - die erreichte Position durch das Einbringen des Sicherungselements in die Ausnehmung fixiert wird.

Das Sicherungselement steht nach dem Einbringen in die Ausnehmung in Wirkverbindung mit der Innenwandung des Lenkgehäuses (in einem Bereich, in dem die Innenwandung des Lenkgehäuses radial an den Außenumfang des Exzenters angrenzt). Außerdem steht das Sicherungselement in Wirkverbindung mit dem Außenumfang des Exzenters (in einem Bereich, in dem der Außenumfang des Exzenters radial an den Innenumfang des Lenkgehäuses angrenzt). Das Sicherungselement erzeugt folglich eine Wirkverbindung zwischen dem Außenumfang des Exzenters und der Innenwandung des Lenkgehäuses in einem Bereich, welcher den ringförmigen Außenumfang des Exzenters radial umgibt. Weitere Sicherungsmaßnahmen sind nicht notwendig.

Die erfindungsgemäße Lösung ermöglicht es, in einfacher und kostengünstiger Weise die Einstellung der Riemenspannung sowohl während der Montage als auch im Betrieb zu sichern. Die Montage des Sicherungselements ist einfach und schnell durchführbar. Wie sich in Versuchen herausgestellt hat, resultiert aus der erfindungsgemäßen Lösung eine hohe Betriebssicherheit.

Von Vorteil ist es, wenn das Sicherungselement in einem Reib- und/oder Formschluss bzw. einem Konturschluss mit dem Exzenter und/oder dem Lenkgehäuse steht. Ein Formschluss des Sicherungsstifts vorzugsweise sowohl mit dem Lenkgehäuse als auch mit dem Exzenter hat sich hierbei als besonders geeignet herausgestellt. In besonders einfacher Weise lässt sich dies dadurch erreichen, dass der Innendurchmesser der Ausnehmung wenigstens in einem Teilbereich geringer ist als der Außendurchmesser des Sicherungselements. Von Vorteil kann es dabei sein, wenn das Sicherungselement eine Außenprofilierung, z. B. eine Rändelung aufweist. Dadurch wird einerseits die Montagekraft reduziert, andererseits dient dies dem Toleranzausgleich der zueinander gesicherten Bauteile.

In einer konstruktiven Ausgestaltung der Erfindung kann ferner vorgesehen sein, dass das Sicherungselement zur Fixierung gegenüber wenigstens einem axial angrenzenden Bauteil wenigstens in eine Axialrichtung mit wenigstens einem axial vorstehenden Fixierungselement versehen ist. Durch die axial vorstehenden Fixierungselemente, beispielsweise Spitzen, kann eine zusätzliche axiale Sicherung des Exzenters zu einem angrenzenden Bauteil erreicht werden.

Von Vorteil ist es dabei, wenn das Sicherungselement zur Fixierung gegenüber zwei axial angrenzender Bauteile, zwischen denen das Sicherungselement angeordnet ist, an beiden axialen Enden mit in Axialrichtung überstehenden Spitzen versehen ist. Der Exzenter wird somit zwischen axial angrenzenden Bauteilen über das Sicherungselement fixiert bzw. eingespannt. Bei den beiden axial angrenzenden Bauteilen kann es sich z. B. um einen Teil des Lenkgehäuses und einen Gehäusedeckel handeln. Die axiale Sicherungswirkung wird dabei vorzugsweise durch die Montage des Gehäusedeckels hergestellt. Durch die Montage des Gehäusedeckels dringen die Spitzen wenigstens teilweise in den Gehäusedeckel und den gegenüberliegenden Teil des Lenkgehäuses ein bzw. der Sicherungsstift wird zwischen den Bauteilen eingespannt, wodurch die genannte zusätzliche axiale Sicherung des Exzenters entsteht.

In einer besonders bevorzugten Ausgestaltung der Erfindung kann vorgesehen sein, dass die Ausnehmung und/oder der Sicherungsstift derart ausgestaltet und/oder zueinander angeordnet sind, dass der Exzenter definiert zu dem Lenkgehäuse bewegbar ist. Es hat sich als vorteilhaft herausgestellt, wenn der Exzenter nicht vollständig festgelegt ist, sondern eine definierte Bewegungsfreiheit gegeben ist, z. B. die Möglichkeit, eine definierte Schwenkbewegung zu dem Lenkgehäuse durchzuführen.

Durch eine entsprechende Gestaltung des Sicherungselements und/oder der Ausnehmung ist es möglich, dass der Exzenter innerhalb gewisser Grenzen zu dem Lenkgehäuse beweglich ist. In einfacher Weise lässt sich dies dadurch erreichen, dass der Innendurchmesser der Ausnehmung wenigstens in einem Teilbereich größer ist als der Außendurchmesser des Sicherungsstifts. Dies lässt sich z. B. durch eine Verjüngung des Sicherungselements erreichen.

Der Abstand, der somit zumindest in Teilbereichen zwischen dem Exzenter und dem Sicherungselement vorhanden ist, ergibt eine definierte Bewegungsfreiheit des Exzenters zu dem Lenkgehäuse.

Von Vorteil ist es, wenn der Exzenter wenigstens über einen Teilbereich seiner axialen Länge mit wenigstens einem federnden und/oder elastischen Element versehen ist, über das der Exzenter mit dem Sicherungselement verbunden ist.

Das federnde und/oder elastische Element, welches vorzugsweise als Gummiring ausgebildet ist, unterstützt die Anordnung des Exzenters in dem Lenkgehäuse, ohne jedoch dessen gewünschte definierte Schwenkbeweglichkeit zu dem Lenkgehäuse störend zu beschränken.

Das Sicherungselement kann vorzugsweise als Sicherungsstift ausgebildet sein.

Vorteilhafte Ausgestaltungen und Weiterbildungen der Erfindung ergeben sich aus den weiteren Ansprüchen. Nachfolgend sind anhand der Zeichnung Ausführungsbeispiele der Erfindung prinzipmäßig dargestellt.

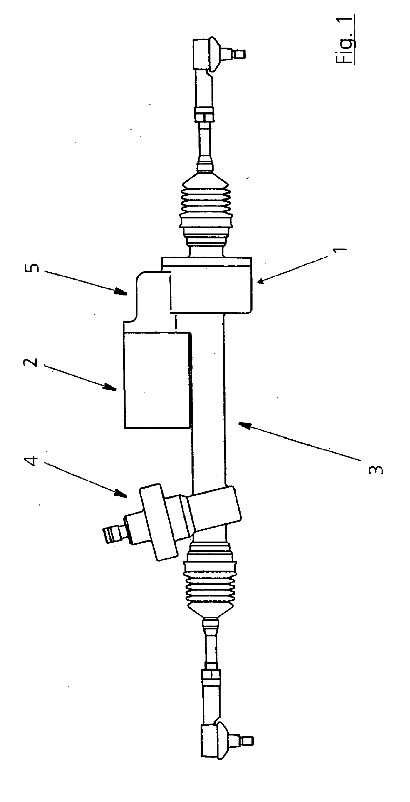

Es zeigt:
1. eine prinzipmäßige Darstellung einer Servolenkung mit einer Spindel bzw. Zahnstange, einem Ritzel mit Drehmomentsensor, einem Elektromotor und einer Getriebeeinrichtung;
2. einen Längsschnitt entlang der Spindel bzw. der Zahnstange der Servolenkung gemäß Fig. 1;
3. einen prinzipmäßigen Querschnitt durch ein Riemengetriebe;
4. eine prinzipmäßige Darstellung der Fixierung des Exzenters zu dem Lenkgehäuse in einer ersten Ausführungsform;
5. eine prinzipmäßige Darstellung der Fixierung des Exzenters zu dem Lenkgehäuse in einer zweiten Ausführungsform;
6. eine prinzipmäßige Darstellung der Fixierung des Exzenters zu dem Lenkgehäuse in einer dritten Ausführungsform; und
7. eine prinzipmäßige Darstellung der Fixierung des Exzenters zu dem Lenkgehäuse in einer vierten Ausführungsform.

Servolenkungen für Kraftfahrzeuge sind aus dem allgemeinen Stand der Technik hinlänglich bekannt, wozu beispielsweise auf die DE 100 52 275 A1 verwiesen wird.

Ein elektromechanisches Lenksystem mit einem achsparallelen Antrieb, mit einem Elektromotor, welcher eine lenkunterstützende Kraft mittels eines Riemengetriebes auf ein Kugelmutter-Spindel-Getriebe überträgt und in dem ein Exzenter zur Einstellung der Riemenspannung eingesetzt wird, ist aus der DE 103 10 492 A1 bekannt, weshalb nachfolgend nur auf die für die Erfindung wesentlichen Merkmale näher eingegangen wird.

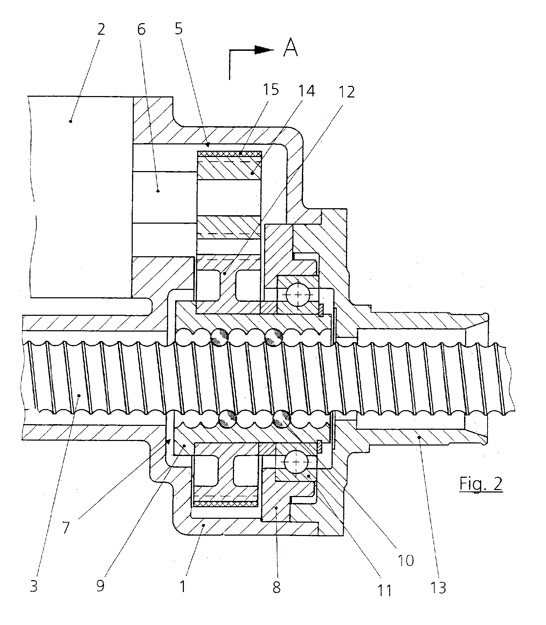

Fig. 1 zeigt eine Servolenkung, insbesondere für Kraftfahrzeuge, mit einem Lenkgehäuse 1, einem Elektromotor 2 und einer Zahnstange 3 zum Auslenken von Fahrzeugrädern. Die Zahnstange 3 ist wenigstens in einem Teilbereich als Spindel ausgebildet. Des weiteren weist die Servolenkung ein Ritzel mit Drehmomentsensor 4 sowie ein Riemengetriebe 5 auf, mittels dem die Zahnstange 3 mit einer in Fig. 2 näher dargestellten Ausgangswelle 6 des Elektromotors 2 antriebsmäßig verbunden ist.

Wie aus Fig. 2 erkennbar, ist ein Kugelmutter-Spindel-Getriebe 7 über einen Exzenter 8, der im Ausführungsbeispiel als Exzenterring ausgebildet ist, im Lenkgehäuse 1 gelagert. Der Exzenter 8 ermöglicht dabei, dass der Achsabstand zwischen der Ausgangswelle 6 und der Zahnstange 3 variierbar ist. Alternativ dazu kann der Exzenter auch den Elektromotor verstellbar lagern.

In bekannter Weise setzt sich das Kugelmutter-Spindel-Getriebe 7 im wesentlichen zusammen aus dem spindelförmigen Teil der Zahnstange 3, einer Lenkmutter 9, Kugeln 10 sowie einer Lagerung 11. Die Lenkmutter 9 ist dabei drehfest mit einer Riemenscheibe 12 bzw. einer Zahnscheibe verbunden. Die Riemenscheibe 12 bildet einen Teil des Riemengetriebes 5.

Die Lenkmutter 9 ist über das Lager 11 und den Exzenterring 8 im Lenkgehäuse 1 gelagert. Ein Gehäusedeckel 13 fixiert sowohl das Lager 11 spielfrei in dem Exzenter 8 als auch den Exzenter 8 in dem Lenkgehäuse 1.

Die Ausgangswelle 6 des Elektromotors 2 ist drehfest mit einer Riemenscheibe 14 bzw. einer Zahnscheibe verbunden, die einen Teil des Riemengetriebes 5 darstellt. Ein Riemen 15 stellt die Verbindung des Elektromotors 2 mit der Zahnstange 3 bzw. dem Kugelmutter-Spindel-Getriebe 7 her. Das Riemengetriebe 5 besteht somit im wesentlichen aus dem Riemen 15 sowie den beiden Riemenscheiben 12, 14. Der Riemen 15 zur Verbindung der beiden Riemenscheiben 12, 14 kann als Zahnriemen, Keilriemen, Vielrippenriemen (Poly-V) oder dergleichen ausgeführt sein.

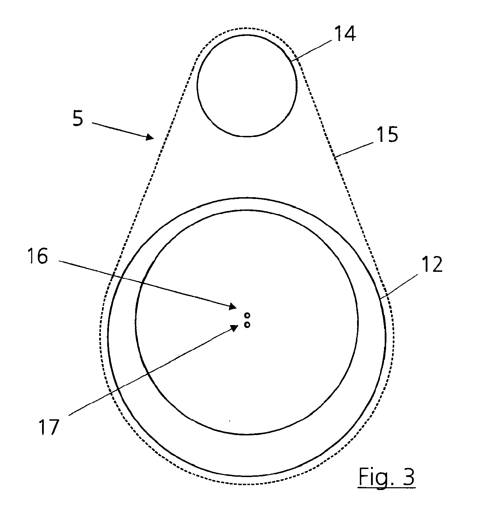

Fig. 3 zeigt einen Schnitt durch das Riemengetriebe 5 mit dem Riemen 15 und den beiden Riemenscheiben 12, 14. Durch eine Verdrehung des Exzenters 8 in dem Lenkgehäuse 1 (in Fig. 3 nicht dargestellt) wird die Achse der Riemenscheibe 12 verschoben. Prinzipmäßig ist in Fig. 3 eine exzentrische Achse 16 und eine zentrische Achse 17 dargestellt.

Details bezüglich der Montage und/oder Einstellung des Riemens 15, der Riemenscheiben 12, 14 sowie des Exzenters 8 ergeben sich aus der DE 103 10 492 A1.

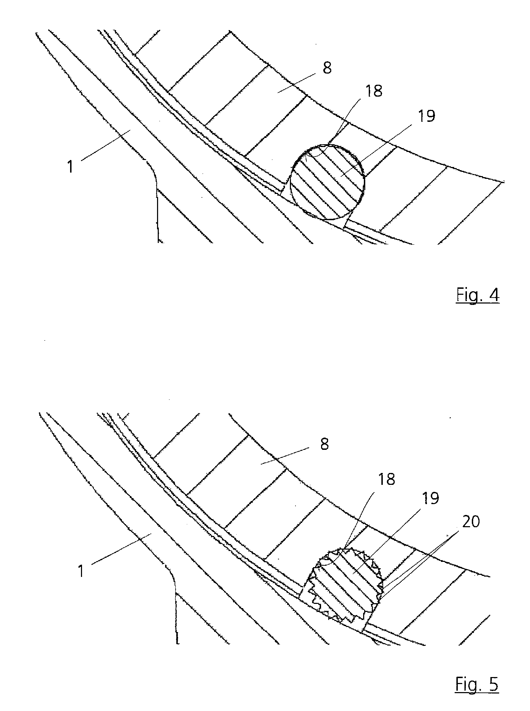

Die Einstellung der Spannung des Riemens 15 erfolgt durch ein Verdrehen des Exzenters 8 in dem Lenkgehäuse 1. Wie aus den Figuren 4 bis 7 im Detail ersichtlich ist, weist der Exzenter 8 im Außenumfang eine Ausnehmung 18. Die Ausnehmung 18 könnte alternativ dazu auch in einer Innenwandung des Lenkgehäuses 1 oder teilweise in der Innenwandung des Lenkgehäuses 1 und teilweise im Außenumfang des Exzenters 8 angeordnet sein. Vorgesehen sein können dabei auch mehr als eine Ausnehmung 18.

Nach Einstellung der Riemenspannung durch ein Verdrehen des Exzenters 8 im Lenkgehäuse 1 wird in die Ausnehmung 18 ein Sicherungselement 19 eingebracht. In den Ausführungsbeispielen gemäß den Figuren 4 bis 7 ist das Sicherungselement als Sicherungsstift 19 ausgebildet. Nach dem Einbringen in die Ausnehmung 18 steht der Sicherungsstift 19 reibschlüssig (Fig. 4) bzw. formschlüssig (Fig. 5) in Wirkverbindung mit dem Exzenter 8 und dem Lenkgehäuse 1.

Wie aus Fig. 4 ersichtlich ist, ist der Innendurchmesser der Ausnehmung 18 geringer als der Außendurchmesser des Sicherungsstifts 19. Der Sicherungsstift 19 ist dabei zylindrisch ausgebildet.

Die in Fig. 5 dargestellte Ausführungsform unterscheidet sich von der in Fig. 4 dargestellten Ausführungsform dadurch, dass der Sicherungsstift 19 eine als Rändelung ausgebildete Außenprofilierung 20 aufweist.

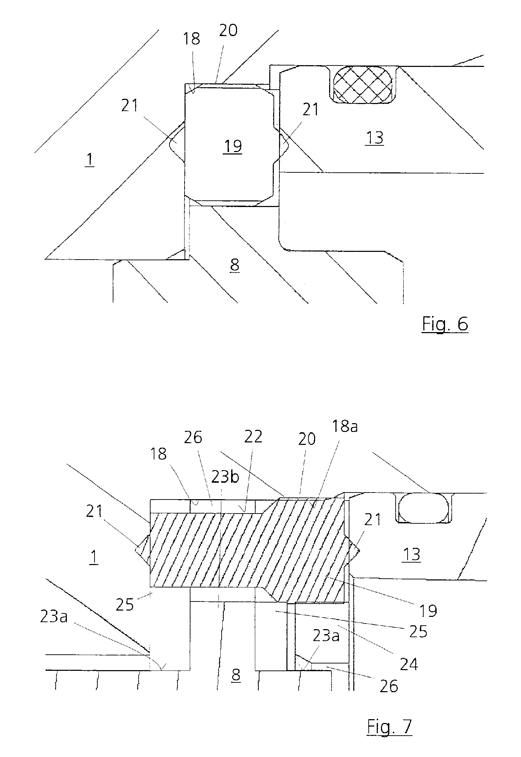

Die in Fig. 6 dargestellte Ausführungsform kann analog zu der in Fig. 4 oder Fig. 5 dargestellten Ausführungsform ausgebildet sein. Zusätzlich dazu sind jedoch axial vorstehende Fixierungselemente 21 vorgesehen. Diese sind als Spitzen 21 in Achsrichtung ausgebildet und sorgen für eine zusätzliche axiale Sicherung des Exzenters 8 zwischen zwei axial angrenzenden Bauteilen. Die axial angrenzenden Bauteile sind im Ausführungsbeispiel das Lenkgehäuse 1 und der Gehäusedeckel 13. In der in Fig. 6 dargestellten Ausführungsform ergibt sich die axiale Sicherungswirkung durch die Montage des Gehäusedeckels 13.

In Fig. 7 ist eine besonders bevorzugte Ausführungsform dargestellt. Ausgangspunkt kann dabei ein Sicherungsstift 19 sein, wie dieser in den Ausführungsformen gemäß den Figuren 4 bis 6 dargestellt ist. Der Exzenter 8 wird gemäß der in Fig. 7 dargestellten Ausführungsform indirekt gesichert. Dies hat sich gegenüber einer direkten Sicherung, wie sich diese aus den Figuren 4 bis 6 ergibt, als vorteilhaft herausgestellt, da sich der Exzenter 8 durch die in Fig. 7 dargestellte indirekte Sicherung etwas bewegen kann. Hierzu ist eine Scheibe bzw. ein Ring 24 vorgesehen, der mittels des Sicherungsstiftes 19 im Gehäuse fixiert ist. Die Ausnehmung 18 im Exzenter 8 ist größer als der Außendurchmesser des Sicherungsstiftes 19. Der Exzenter 8 wird somit durch den Sicherungsstift 19 nur gegen Verdrehen gesichert. Zwischen dem Ring 24 und einem Außendurchmesser 23a des Exzenters 8 ist ein ringförmiger Spalt 26 vorhanden.

Der durch den Sicherungsstift 19 in dem Lenkgehäuse 1 fixierte Ring 24 dient als axialer Anschlag für den Exzenter 8. Dabei ist zwischen dem Ring 24 und einer dem Ring 24 zugewandten Stirnseite eines Außenbereichs 23b des Exzenters 8, welcher die Ausnehmung 18 ausbildet, ein federndes und/oder elastisches Element 25 angeordnet, welches die Bewegung des Exzenters 8 in Richtung auf den Ring 24 dämpft. Das federnde und/oder elastische Element 25 ist im Ausführungsbeispiel als Gummiring ausgebildet. An der von dem Ring 24 abgewandten Stirnseite des Außenbereichs 23b ist ein weiteres federndes und/ oder elastisches Element 25, welches ebenfalls als Gummiring ausgebildet ist, angeordnet. Die beiden Gummiringe 25 stehen in Kontakt mit dem Sicherungsstift 19 ohne die gewünschte Beweglichkeit des Exzenters 8 zu beschränken.

Die Gummiringe 25 können in bekannter Art und Weise mit dem Außenumfang 23a des Exzenters 8 verbunden sein.

Der Ring 24 kann analog zu dem Exzenter 8 eine Ausnehmung 18a zum Einbringen des Sicherungsstiftes 19 aufweisen. Der Außendurchmesser des Sicherungsstiftes 19 und die Ausnehmung 18a können dabei derart aufeinander angepasst sein, dass der Sicherungsstift 19 reibschlüssig und/oder formschlüssig mit dem Ring 24 und dem Lenkungsgehäuse 1 verbunden werden kann. Vorzugsweise lässt sich dies dadurch erreichen, dass der Innendurchmesser der Ausnehmung 18a wenigstens in einem Teilbereich geringer ist als der Außendurchmesser des Sicherungsstiftes 19.

Gemäß der in Fig. 7 dargestellten Ausführungsform ist vorgesehen, dass die Ausnehmungen 18 und 18a den gleichen Durchmesser aufweisen, jedoch der Sicherungsstift 19 im Bereich der Ausnehmung 18 mit einer Verjüngung versehen ist, die gewährleistet, dass der Außendurchmesser des Sicherungsstifts 19 kleiner ist als der Innendurchmesser der Ausnehmung 18.

Die erfindungsgemäße Lösung eignet sich auch für Zahnstangenlenk ungen mit redundantem elektrischen Antrieb, z. B. für Steer-by-Wire-Lenkungen, die einen zweiten Elektromotor sowie ein zweites Riemengetriebe aufweisen.

## Patentansprüche

1. Servolenkung, insbesondere für ein Kraftfahrzeug, mit einem Elektromotor, welcher eine lenkunterstützende Kraft mittels eines Riemengetriebes auf ein Kugelmutter-Spindel-Getriebe zum Auslenken von Fahrzeugrädern überträgt, wobei das Kugelmutter-Spindel-Getriebe und/oder der Elektromotor mittels eines Exzenters in einem Lenkgehäuse gelagert sind, und wobei durch eine Verdrehung des Exzenters zum Lenkgehäuse die Spannung eines Riemens des Riemengetriebes einstellbar ist, **dadurch gekennzeichnet, dass** der Exzenter (8) am Außenumfang und/oder das Lenkgehäuse (1) an seiner Innenwandung wenigstens eine Ausnehmung (18) aufweisen, in die zur Fixierung des Exzenters (8) zu dem Lenkgehäuse (1) ein Sicherungselement (19) einbringbar ist, welches nach dem Einbringen in Wirkverbindung mit dem Exzenter (8) und dem Lenkgehäuse (1) steht.

2. Servolenkung nach Anspruch 1,**dadurch gekennzeichnet, dass** das Sicherungselement (19) in einem Reibschluss und/oder Formschluss mit dem Exzenter (8) und/oder dem Lenkgehäuse (1) steht.

3. Servolenkung nach Anspruch 1 oder 2,**dadurch gekennzeichnet, dass** der Innendurchmesser der Ausnehmung (18) wenigstens in einem Teilbereich geringer ist als der Außendurchmesser des Sicherungselements (19).

4. Servolenkung nach Anspruch 1, 2 oder 3,**dadurch gekennzeichnet, dass**das Sicherungselement (19) als Sicherungsstift ausgebildet ist.

5. Servolenkung nach Anspruch 4, **dadurch gekennzeichnet, dass** der Sicherungsstift (19) zylindrisch ausgebildet ist.

6. Servolenkung nach Anspruch 4 oder 5, **dadurch gekennzeichnet, dass** der Sicherungsstift (19) eine Außenprofilierung (20) aufweist.

7. Servolenkung nach Anspruch 6, **dadurch gekennzeichnet, dass** die Außenprofilierung (20) als Rändelung ausgebildet ist.

8. Servolenkung nach einem der Ansprüche 4 bis 7, **dadurch gekennzeichnet, dass** der Sicherungsstift (19) zur Fixierung gegenüber wenigstens einem axial angrenzenden Bauteil wenigstens in eine Axialrichtung mit wenigstens einem axial vorstehenden Fixierungselement (21) versehen ist.

9. Servolenkung nach Anspruch 8, **dadurch gekennzeichnet, dass** der Sicherungsstift (19) zur Fixierung gegenüber zwei axial angrenzenden Bauteilen, zwischen denen der Sicherungsstift (19) angeordnet ist, an beiden axialen Enden wenigstens ein axial vorstehendes Fixierungselement (21) aufweist.

10. Servolenkung nach Anspruch 8 oder 9, **dadurch gekennzeichnet, dass** ein axial angrenzendes Bauteil das Lenkgehäuse (1) und das andere axial angrenzende Bauteil ein Gehäusedeckel (13) ist.

11. Servolenkung nach Anspruch 10, **dadurch gekennzeichnet, dass** die axiale Sicherung über die Fixierungselemente (21) durch die Montage des Gehäusedeckels (13) herstellbar ist.

12. Servolenkung nach einem der Ansprüche 4 bis 11, **dadurch gekennzeichnet, dass** die Ausnehmung (18) und/oder der Sicherungsstift (19) derart ausgebildet und/oder zueinander angeordnet sind, dass der Exzenter (8) definiert zu dem Lenkgehäuse (1) schwenkbar ist.

13. Servolenkung nach Anspruch 12, **dadurch gekennzeichnet, dass** der Innendurchmesser der Ausnehmung (18) wenigstens in einem Teilbereich größer ist als der Außendurchmesser des Sicherungsstifts (19).

14. Servolenkung nach Anspruch 12 oder 13,**dadurch gekennzeichnet,dass** der Sicherungsstift (19) eine Verjüngung (22) aufweist.

15. Servolenkung nach Anspruch 12, 13 oder 14,**dadurch gekennzeichnet, dass**eine als Anschlag für den Exzenter (8) ausgebildete Scheibe bzw. ein Ring (24) über den Sicherungsstift (19) drehfest mit dem Lenkgehäuse 1 verbunden ist.

16. Servolenkung nach Anspruch 15, **dadurch gekennzeichnet, dass** der Ring (24) mit Abstand zu einem Außenumfang (23a,23b) des Exzenters (8) angeordnet ist.

17. Servolenkung nach Anspruch 16, **dadurch gekennzeichnet, dass** zwischen dem Ring (24) und einer dem Ring (24) zugewandten Stirnseite des Außenumfangs (23b) ein federndes und/oder elastisches Element (25) angeordnet ist.

18. Servolenkung nach Anspruch 16 oder 17, **dadurch gekennzeichnet, dass** an der von dem Ring (24) abgewandten Stirnseite des Außenumfangs (23b) ein weiteres elastisches und/oder federndes Element (25) angeordnet ist.

19. Servolenkung nach Anspruch 17 oder 18, **dadurch gekennzeichnet, dass** die federnden und/oder elastischen Elemente (25) eine flexible Verbindung zwischen dem Außenumfang (23a) des Exzenters (8) und dem Sicherungsstift (19) herstellen.

20. Servolenkung nach Anspruch 17, 18 oder 19, **dadurch gekennzeichnet, dass** die federnden und/oder elastischen Elemente als Gummiringe (25) ausgebildet sind.

21. Servolenkung nach einem der Ansprüche 15 bis 20, **dadurch gekennzeichnet, dass** der Ring (24) eine Ausnehmung (18a) zur Aufnahme des Sicherungsstifts (19) aufweist.

22. Servolenkung nach Anspruch 21, **dadurch gekennzeichnet, dass** der Innendurchmesser der Ausnehmung (18a) wenigstens in einem Teilbereich geringer ist als der Außendurchmesser des Sicherungsstifts (19).

23. Servolenkung nach Anspruch 21 oder 22, **dadurch gekennzeichnet, dass** der Innendurchmesser der Ausnehmung (18) dem Innendurchmesser der Ausnehmung (18a) entspricht, wobei der Sicherungsstift (19) im Bereich der Ausnehmung (18) eine Verjüngung aufweist.
